# EUROPEAN PATENT SPECIFICATION

(11) **EP 0 624 684 B1**
(45) Date of publication and mention of the grant of the patent: **15.10.1997**
(21) Application number: 94104849.8
(22) Date of filing: 28.03.1994
(51) Int. Cl.: D21D 5/16

(54) **Screening cylinder**
Zylindrischer Siebkorb
Cylindre pour épurateur

(30) Priority: 14.05.1993 SE 9301661
(43) Date of publication of application: 17.11.1994
(73) Proprietor: AKTIEBOLAGET KNUTSILPLATAR, 467 21 Grästorp (SE)
(72) Inventor: Malm, Jan, S-467 00 Grästorp (SE)
(74) Representative: Sundqvist, Hans

(56) References cited:
- EP-A- 0 067 912
- DE-A- 3 327 422
- US-A- 5 011 065

## Description

This invention relates to a screening cylinder for a device for screening suspensions of lignocellulose-containing fiber material.

The screening of suspensions of fiber material has the object to separate coarse particles in the form of shives, fiber bundles and other impurities from the fiber material, or to fractionate, i.e. to separate long and short fibers. The screening normally is carried out in screening devices comprising a stationary or rotary screening cylinder. The screening cylinder is provided with apertures or slits, through which the fibers, but not the impurities, can pass.

Screening cylinders of this kind are manufactured normally by drilling apertures or milling slits in a metal sheet, which then is formed to a cylinder. In order to obtain an open area as large as possible, the apertures or slits must be arranged densely.

At another method of forming a screening cylinder, the cylinder is made of bars, which are held together by supporting rings in such a way, that gaps are formed between the bars and extend in the entire length of the cylinder see documents EP-A-0 067 912 and US-A-5 011 065. Such a screening cylinder has many advantages over a conventionally slitted screening cylinder, for example a greater open area and a higher selectivity in respect of shives separation and fractionating. The bars, alternatively, can be formed of a metal sheet by arranging a great number of parallel grooves therein.

It can be advantageous to form the surface of the screening cylinder in such a way, that the upstream edges of the gaps are located on a higher level than the downstream edges, seen in the relative motion direction of the suspension. This offers many advantages from a screening-technical point of view. Screening cylinders comprising gaps of this kind have a,o, a higher capacity and high shives separation capability. In certain cases, however, for example when capacity has priority, it can be desirable to form the screen surface plane or so that the downstream edges are located higher than the upstream edges.

By forming the screening cylinder according to the present invention it is possible to additionally improve the efficiency and runnability of the screening device.

The characterizing features of the invention are defined in the attached claims.

The invention is described in greater detail in the following, with reference to the accompanying drawings showing an embodiment of the invention.
Fig. 1 shows a screening cylinder according to the invention.
Figs. 2 and 3 are cross-sections of a portion of a screening cylinder according to two different embodiments.

According to the embodiments shown, the screening cylinder 10 is formed of a great number of substantially bar-shaped portions 11, which between themselves form gaps 12 extending along the entire length of the cylinder. The bar-shaped portions 11 are so positioned that a screen surface is formed where the edges of the gaps are located on different heights, preferably so that the upstream edge lies higher than the downstream edge, seen in the intended motion direction of the suspension relative to the screening cylinder. This can be brought about preferably by giving the bar-shaped portions 11 an oblique upper surface 13, for example by bevel grinding or inclination of these portions. The angle α of this oblique upper surface 13 can be between 0 and 45^{o}, preferably between 10 and 30^{o}, in relation to the circumferential direction of the screen surface. The difference in level between the edges should be between 0 and 5 mm. The width of the gaps 12 should be 0.05-1.0 mm, preferably 0.1-0.5mm, and the bar-shaped portions should have a width of 0.5-7 mm. Alternatively, the edges of the gaps can be located on the same level or so, that the downstream edge is located higher than the upstream edge. The dimension ranges stated above apply also in these cases.

At the embodiments shown, which relate to screening cylinders used for inside-outward screening, the bar-shaped portions 11 are held together by a plurality of supporting rings 14 arranged on the outside of the cylinder and extending all about the same. The rings preferably are attached by welding. The cylinder is provided on its inside with a plurality of strips 15 extending along the entire length of the cylinder or parts thereof and inward so as to be located at some distance above the bar-shaped portions 11. These strips 15 can be axial or form angles with the axial direction of the screening cylinder.

When the cylinder is intended for use at outside-inward screening, the overall supporting rings 14 are located on the inside of the cylinder, and the strips 15 on its outside.

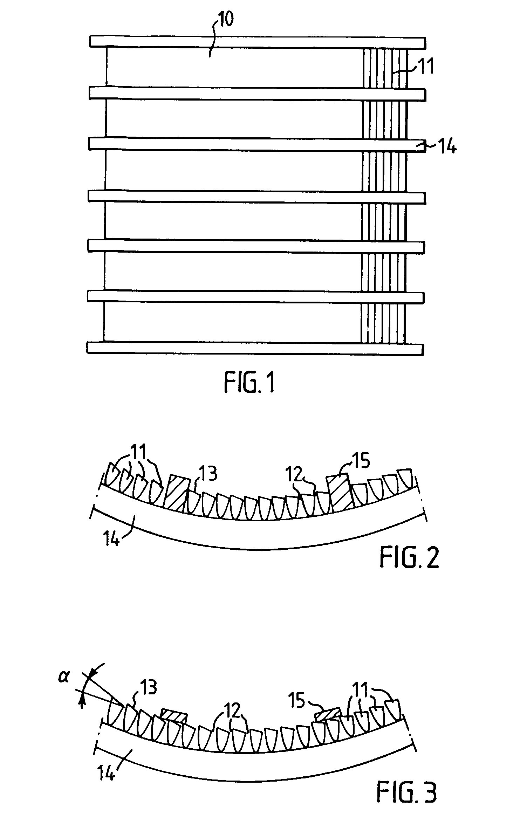

According to the embodiment shown in Fig. 2, the strips 15 are inserted between the bar-shaped portions 11 and attached on the supporting rings 14. According to the embodiment shown in Fig. 3, the strips 15 are attached above the bar-shaped portions 11.

The strips 15 can have rectangular cross-section or rounded upper edges, or may have another configuration, which implies that the strips at the screening process give rise to strong extra pulses in the fiber suspension. Such pulses have proved to substantially improve the runnability of the screening device. The fluidization in the fiber suspension is improved, whereby smaller slit widths can be used at maintained capacity, which yields a cleaner pulp without employing more or greater screens.

Furthermore, the long fiber fraction in the accept can be increased. It is also possible to screen fiber suspensions at high concentration, up to about 7%, which in its turn results in many advantages, such as smaller pumps, smaller pipe dimensions, less space requirement a.s.o.

The invention, of course, is not restricted to the embodiments described above, but can be varied within the scope of the invention idea.

## Claims

1. A screening cylinder for screening suspensions of lignocellulose-containing fiber material, which screening cylinder (10) is formed with bar-shaped portions (11), which between themselves form gaps (12) extending along the entire length of the cylinder (10), which bar-shaped portions (11) are held together by a number or supporting rings (14) arranged on the cylinder (10) and extending all about the same, **characterized in** that the screening cylinder is provided with a plurality of strips (15), which are attached above the bar-shaped portions (11) and arranged so as to form angles with the axial direction of the screening cylinder (10) and extend along the entire length of the cylinder or parts thereof.

2. A screening cylinder as defined in claim 1, **characterizeed in** that the upper surfaces (13) of the bar-shaped portions (11) which form the screening surface of the cylinder (10) are oblique and form an angle (α)with the circumferential direction, which angle is between 0 and 45°, preferably 10-30°.

## Patentansprüche

1. Siebzylinder zum Sieben von Suspensionen aus Lignocellulose-enthaltendem Fasermaterial, wobei der Siebzylinder (10) von leistenförmigen Teilen (11) gebildet wird, die zwischen sich Zwischenräume (12) bilden, die sich über die gesamte Länge des Zylinders (10) erstrecken, wobei die leistenförmigen Teile (11) von einer Anzahl von Stützringen (14) zusammengehalten werden, die an dem Zylinder (10) angebracht sind und sich um denselben herum erstrecken,
**dadurch gekennzeichnet,**
daß der Siebzylinder mit einer Vielzahl von Stäben (15) versehen ist, die über den leistenförmigen Teilen (11) angebracht und so angeordnet sind, daß sie mit der Axialrichtung des Siebzylinders (10) Winkel bilden und sich über die gesamte Länge des Zylinders oder Teilen davon erstrekken.

2. Siebzylinder nach Anspruch 1,
**dadurch gekennzeichnet**,
daß die oberen Flächen (13) der leistenförmigen Teile (11), die die Siebfläche des Zylinders (10) bilden, schräg sind und einen Winkel (α) mit der Umfangsrichtung bilden, wobei der Winkel zwischen 0 und 45°, vorzugsweise 10 - 30°, ist.

## Revendications

1. Cylindre d'épuration pour épurer des suspensions de matériau fibreux contenant de la lignocellulose , cylindre d'épuration (10) qui est constitué de parties configurées en barre (11), qui forment entre elles des intervalles (12) s'étendant sur toute la longueur du cylindre (10), parties configurées en barre (11) qui sont maintenues ensemble par un certain nombre d'anneaux de support (14) disposés sur le cylindre (10) et s'étendant tout autour de ce cylindre, caractérisé en ce que le cylindre d'épuration est muni d'une pluralité de bandes (15) qui sont fixées au-dessus des parties configurées en barre (11) et disposées de façon à former des angles avec la direction axiale du cylindre d'épuration (10) et s'étendent sur toute la longueur du cylindre ou sur certaines de ses parties.

2. Cylindre d'épuration selon la revendication 1, caractérisé en ce que les surfaces supérieures (13) des parties configurées en barre (11) qui forment la surface d'épuration du cylindre (10) sont obliques et forment un angle (α) avec la direction circonférencielle , lequel angle mesure entre 0 et 45°, de préférence , entre 10 à 30°.
